# EUROPEAN PATENT APPLICATION

(11) **EP 4 841 026 A1**
(43) Date of publication of application: **18.11.2026**
(21) Application number: 26179064.6
(22) Date of filing: 15.05.2026
(51) Int. Cl.: E02D 33/00, E02D 27/42, G01M 5/00

(54) **METHOD FOR DETERMINING DETECTING MEANS FOR CHECKING ADHESION BETWEEN METAL ELEMENTS AND CONCRETE OF A FOUNDATION OF A WIND GENERATOR**

(30) Priority: 16.05.2025 IT 202500011138
(71) Applicant: Sismlab S.r.l., 87036 Rende (CS) (IT)
(72) Inventor: PORCO, Giacinto, 87036 Rende (CS) (IT)
(74) Representative: Luppi Intellectual Property S.r.l.

(57) **Abstract**

A method is disclosed for selecting detecting means for checking a foundation of a wind generator, in particular for checking the adhesion of metal elements, like anchor rings or anchor bolts, sunken into concrete to ensure the solidity of the structure, in which vertical movements are acquired on at least four points that are opposite one another in pairs, located at the base of the wind generator, by detecting means selected by a preliminary investigation task that is suitable for assessing the features of the parameters to be acquired, so that the detecting means is selected so as to be effective in the acquisition, but decoupled from redundancies.

## Description

### Background of the invention

The invention relates to a method for determining detecting means for checking adhesion between metal elements of a structure and concrete of a foundation of a wind generator.

Specifically, but not exclusively, the invention in question can be used to check, in particular with a static approach, the adhesion of metal elements, such as anchor rings/rings or anchor bolts, sunken into concrete to ensure the solidity of the structure.

### Prior art

Conducting routine checks on wind generators (or wind power towers) and, more precisely, on the elements that join the parts of a wind generator linked to civil engineering with the parts linked to industrial engineering, is known. Indeed, a wind generator is a comprehensive system where two engineering systems come into contact, namely, the industrial technology system and the civil engineering system.

With regard to the reality of civil engineering, thus principally the control of the foundation structures, comprising the system of solidification between the tower and the reinforced concrete structure, it is noted that the concept of the working life of a wind generator was introduced recently by NTC 2008 (Technical Standards for Construction), together with identifying methods for performing preliminary screening task based on a reliable maintenance schedule.

The prior art comprises different checking tasks performed by an operator on a wind generator.

A first task involves checking the reinforced concrete of the foundation through static and/or dynamic approaches designed to ensure that the safety coefficients set during the design phases are still present during operation.

A second task involves checking joining elements, in general, bolts, located at the base of the wind generator. In particular, the joining elements are located in a contact zone between a ring or anchor ring, that is mostly sunken inside the concrete of the foundation, and a (steel) structural element belonging to the tower structure of the wind generator, generally a flange at the base of the tower. Checking the joints can comprise, in particular, a static torque test of the bolts and a check of damage to the bolts, generally performed with ultrasound technology.

A third task is to check the level of solidity, depending on the type of foundation, between the ring or the anchor ring sunken in the reinforced concrete or the anchor bolts and the foundation in reinforced concrete. This check can comprise, in particular, identifying (with a static approach and/or dynamic approach) areas of detachment. This identifying can then be used to schedule consolidation jobs in order to solidify anew the anchor ring itself or the anchor bolts to the existing concrete.

The method that is the object of this invention enables tasks to be performed that belong substantially to this third category of checking tasks, in particular with a static approach.

### Summary of the invention

One object of this invention is to provide a method for determining detecting means for checking the level of solidity between a metal element (for example an anchor ring or an anchor bolt) sunken in the reinforced concrete of the foundation of a wind generator and the reinforced concrete itself and it is an alternative to those of the prior art.

One object of this invention is to enable a test to be run in order to ensure increased durability of a foundation of a wind generator.

One object of this invention is to provide a method for determining detecting means for checking the adhesion of metal elements (couplings, anchor rings, anchor bolts, etc.) operationally associated with the building material (in general concrete) of the foundation to ensure the solidity of the structure of the wind generator.

These objects and still others are achieved by a method according to one or more of the claims set out below.

In one embodiment, a method for determining detecting means for checking adhesion between metal elements and concrete in a foundation of a wind generator comprises a preliminary analysis task or predictive analysis task that is performed to determine the features of the parameters that will have to be acquired, so that the detecting means is detected so as to be effective in acquisition but decoupled from redundancies.

One method of checking adhesion between metal elements and concrete in a foundation of a wind generator comprises acquiring vertical movements on a plurality of monitoring points, in particular at least four monitoring points that are opposite one another two by two, located at the base of the wind generator, by selected detecting means; in particular, the adhesion check comprises the following phases: detecting a direction of the wind in the place where the wind generator is situated; storing a prevailing direction of the wind in the aforesaid place; determining a plurality of monitoring points of the foundation on the basis of the detected direction of the wind and of the direction of the prevailing wind; installing suitable detecting means to detect the vertical movements at the aforesaid monitoring points; in particular, before installing, at least one expected, predictable or calculatable feature of a movement is determined in a vertical direction of at least one point of the foundation; selecting the aforesaid detecting means on the basis of the aforesaid feature of the expected movement so that the detecting means is suitable for detecting the aforesaid expected movement.

Owing to the phase of determining at least one movement feature, it is possible to establish the features that the detecting means has to satisfy in order to be able to make a significant measurement. Indeed, a phenomenon is observable if the measuring instrument is able to detect it. Accordingly, determining at least one expected movement feature and selecting the detecting means on the basis of the feature of the expected movement enables an acquisition to be made in the field of measurements of the vertical movements that are effectively significant for the condition of adhesion or for the condition of release of the metal elements in the concrete of the foundation.

The monitoring points can be, in particular, four monitoring points arranged symmetrically two by two with respect to a centre of the wind generator and with respect to the aforesaid directions of the wind, i.e. the direction detected in real time and the statistically determined prevailing direction.

The aforesaid feature of the expected movement can be determined, in particular, by at least one numeric simulation, for example a computational numeric simulation, in particular by a finite element analysis, performed on the basis of the known features of the wind generator or on the basis of a modelling of an analogous wind generator, i.e. of a wind generator that is congruent with the test wind generator. A simulation can be run in different conditions, for example a simulation that considers modelling of an undamaged wind generator and a simulation that considers modelling of a wind generator with simulated damage, in particular with detachment of the metal elements, this modelling being able to refer to wind generators that are consistent with the test wind generator. The finite element analysis can involve a static approach.

The aforesaid feature of the expected movement can be determined, in particular, on the basis of historical information relating to an analogous situation, for example vertical movement values recorded on a wind power tower or a wind generator that is congruent with the test wind generator.

The detecting means can comprise, in particular, at least one movement detector arranged in contact in each monitoring point. The movement detector can be selected so as to have suitable precision and/or a suitable bottom scale for detecting said expected set movement. This detecting means can thus comprise contact sensors that are arranged in the aforesaid set monitoring points and which are suitable for measuring the vertical movements of these points (the contact sensors means, including the movement detector, can further comprise, for example, comparators, load cells, movement transducers, position transducers, etc).

In addition to or in replacement of the sensor means that operate in contact, the detecting means can comprise, in particular, remote sensor means, like for example viewing means (for example, a camera with a suitable photogram frequency) configured to detect vertical movements. In particular, the viewing means is installed in the aforesaid monitoring points to detect the vertical movements of these points. The viewing means can be so selected as to have a sufficiently high sampling frequency to detect the set expected movement.

The vertical movements of the monitoring points can be acquired, in particular, if a wind speed measured in real time is greater than a set value that can be, in particular, equal to 7 m/sec.

The vertical movements of the monitoring points can be acquired, in particular, in at least one arresting phase of the wind generator.

The vertical movements of the monitoring points can be acquired, in particular, in a starting phase of the wind generator.

The method in question can comprise, in particular, a phase of imposing an arresting procedure of the wind generator of an ordinary nature (normal arrest, also known as a Normal Stop) during operation. The method in question can comprise, in particular, a phase of imposing an arresting procedure for arresting the wind generator in an emergency, again during operation (emergency arrest, also known as Emergency Stop).

For each of the aforesaid two arrest procedures, there can be in particular an acquisition phase for acquiring vertical movements on the two pairs of points, that are opposite two by two, located at the base of the wind generator.

In particular, a preliminary analysis phase is envisaged, known below also as a predictive analysis phase, before starting the wind generator and thus before setting the aforesaid arrest procedures during operation, in which the phase of selecting the detecting means can be included on the basis of the feature of the expected movement.

The preliminary analysis phase can include a planning phase of the acquisition phase for acquiring vertical movements, which is inserted into an in-site procedure. This programming phase can thus include the results of determining the detecting means that is suitable for in-site detection of the vertical movements of that specific wind power tower.

As mentioned above, the aforesaid feature of the expected movement can be determined, in particular, on the basis of historical information relating to an analogous situation, for example relating to a wind power tower or wind generator that is consistent with the test wind generator.
The preliminary analysis phase can comprise a preliminary phase of searching the scientific bibliography on the subject, for example on the oscillating behaviour of a wind generator and on the value of the vertical movements of a wind generator in static and/or dynamic load condition. The preliminary analysis phase can involve a phase of prior evaluation of the parameters that have to be acquired by the detecting means, for example a movement, in order to provide useful information for choosing correctly the sensor means to use, so as to use sensor means that is useful and effective to acquire but decoupled from redundancies.

This preliminary analysis phase enables a set of ordered historical data to be stored, for example, on the basis of the features (structural and operational and on the materials) of the various prior art wind generators.

As said, the method in question can comprise a preliminary analysis phase or predictive analysis phase. The method can further comprise an experimental investigation phase with which to run the acquisition phase of the vertical movements on the wind generator using the selected detecting means.

The preliminary analysis phase can comprise, in particular, a phase of numerical simulation processing through FEM (finite element method) discretization of the phenomenon to be observed on the foundation and thus determining predictive modelling of the phenomenon of loosening of the metal elements.

As said, this predictive modelling can be performed on wind generators that are congruent with those that are the object of analysis.

This predictive modelling has, in particular, the objective of identifying damping time and the frequencies in play of the representative parameters of the phenomenon.

Numerical simulation processing by FEM discretization has, in particular, the objective of identifying the theoretical values of the expected vertical movements on the wind generators.

These theoretical values of the vertical movements can be calculated both by considering models of undamaged towers, and by considering models of towers with simulated damage.

The method in question can comprise, in particular, a phase of identifying the technical requirements of the detecting means that have to be used to observe and measure the phenomenon, both in the case of using the contact sensors (for example the movement transducers), and in the case of use of remote sensor means (for example the camera), in order to be able to acquire data at the correct frequency without redundancy.

As has been seen, the method in question can comprise, in particular, a phase of programming and preparing the experimental investigation campaign and, last, a phase of running the investigation campaign.

The method in question enables a procedural protocol to be defined that defines a chronology of tasks to perform and can constitute a guide for checking adhesion.

The procedural protocol can be summarized as follows:
- Bibliographical search;
- Analysis of field experimental procedure for performing arresting phases of the wind generator to be checked;
- Processing numerical simulations by FEM discretization of the phenomenon to be observed. The predictive modelling using wind generators that are congruent to those that are the object of analysis has the objective of identifying damping time and the frequencies in play of the representative parameters;
- Numerical simulation processing by FEM discretization, with the objective of identifying the theoretical values of the expected vertical movements on the wind generators both for undamaged towers and towers with simulated damage;
- Defining the technical requirements for contact detectors and visual recording to be used to observe the phenomenon and acquire data at the correct frequency without redundancy;
- Programming and preparing the investigation campaign;
- Running the investigation campaign;
- Returning the experimental results.

### Detailed description

A specific embodiment of a method for testing the foundation of a wind generator comprising a preliminary analysis phase or predictive analysis phase and an experimental investigation phase is disclosed in greater detail below. The preliminary analysis phase includes a phase of determining an expected vertical movement in elements of the foundation; the preliminary analysis phase can further include a phase of selecting detecting means on the basis of at least one feature of the expected movement of the foundation.

The experimental investigation phase includes a phase of acquiring in site , i.e. on the wind generator object of the test, measuring the vertical movement by the selected detecting means. Experimental studies have shown that the formation of zones of detachment of steel concrete, for example in the case of the type of foundation with ring or anchor ring, occurs through the effect of vertical movements at the base. These vertical movements can occur either during oscillations of the wind power tower in the operations of arresting the machine or in the course of normal operation because of a condition of high wind load. The vertical movements are also to be ascribed to differential failure of the ring because of the occurrence of localized crushing of the concrete below the lower flange of the ring. For these reasons, the experimental investigation phase measures vertical movements. By comparing measurements of the vertical movements with values of the corresponding limit vertical movement between the anchor ring and the foundation normally provided by the manufacturer of the wind power tower, it is possible to determine a state of solidity between the anchor ring and the foundation and, as a result, establish if it is necessary to intervene on the wind power tower to restore solidity conditions between the anchor ring and foundation in reinforced concrete or conduct a new check subsequently.

### Experimental investigation phase or test

The example of a procedure followed to run experimental tests comprises a series of steps ordered chronologically that envisage at least two different load conditions, obtained by setting two different states for the wind generator, during which acquisition of the movements in four points that are opposite two by two is required.

The experimental investigation procedure can involve, in particular, the following steps.

One step involves taking the wind generator to a machine arrest condition, i.e. with the wind generator not in operation.

One step comprises identifying the direction of the wind and checking non-coincidence of the identified current wind direction with the direction of the predefined prevailing wind. On this task depends installing the work at four points (symmetrically two by two) with respect to a centre of the tower, in the current direction of the measured wind and in the predefined prevailing direction (obtainable from historic records of data on the wind acting on the wind generator), of detecting means, i.e. measuring instruments (like for example movement detectors and/or cameras) and consequently identifying the areas to be monitored during the two loading procedures that will develop in different sequences.

Commissioning contact transducers (or comparators) and/or setting up cameras to record in the observation points can be performed, in particular, according to a dedicated investigation plan, so as to minimize interference due to ambient conditions. The measuring instruments are installed when the machine is stationary, i.e. in a configuration in which the wind generator is not in operation. Choosing detecting means like, in this case, contact transducers (or comparators) and/or cameras, is determined by the phase of predictive analysis, as will be disclosed below.

It is possible to conduct a wind speed test that has to preferably adopt values greater than 7 m/sec and, in the event of an affirmative outcome, measurements by the detecting means and/or recording of the data detected by the detecting means can be implemented.

When the wind generator is not in operation, the blades are rotated so as not to be subjected to stress due to the wind. Nevertheless, the body and the weight of the blades are present on the resisting members of the wind generator so that the start-up configuration cannot be considered to be a rest configuration but a configuration with stress regimes present.

Wind speed continues to be checked, which must adopt values greater than 7 m/sec. In the event of a positive outcome, a further step can comprise the start of recording of the vertical movement measurements by the detecting means.

Wind speed continues to be checked and, in the event of a positive outcome, the wind generator will moreover start production in line with load requirements dictated by the commissioning procedure dictated for the wind generator (supplied by the manufacturer of the wind power tower). Recording vertical movement measurements over time continues.

If wind speed is greater than 7m/sec and the wind generator has reached the required load requirements, another step comprises imposing a machine arrest. In this machine arrest step, actual measuring of the vertical movements of the pre-selected points occurs. This measuring starts with the arrest of the wind generator. As indicated above, monitoring of the movements starts from an initial condition that corresponds to a machine arrest but which, as has been seen, is still a deformed situation.

A normal arresting procedure (Normal Stop) or emergency arrest (Emergency Stop) is set, depending on the type of test that it is intended to run.

A further step comprises controlling damping of the movements detected by the detecting means (like for example movement detectors) and generated following the oscillation produced by the chosen stop mode and the subsequent stop of the recordings.

It has been established that test precision is greater if the load regime on the wind turbine is generated by a wind at a speed greater than 7 m/sec.

Experimental activities were extended to all load conditions, i.e. normal arrest (Normal Stop) and emergency arrest (Emergency Stop), for at least five minutes of observation. The data detected supply movement values according to time. From the detected values, it is possible to calculate the maximum values of the corresponding vertical movement (owing to the difference between positive maximum movement and negative maximum movement, these movements being detected at the same point) in the tested stop condition and compare these movements with the values of the corresponding limit vertical movement value supplied by the manufacturer of the wind power tower. If the calculated values remain within the range of the corresponding limit vertical value, therefore tasks for re-solidarization of the structure are not envisaged and, vice versa, if the calculated values fall outside the range of the corresponding limit vertical value.

The tests can be conducted, in particular, in a single and non-associated manner. **Phase of experimental analysis or predictive analysis task**

Some deductive steps are set out below on which the choice of the detecting means is based.

As said, one phase of the method is selecting the technical features of the instruments (detecting means) to be used in operation, i.e. to be used in the experimental investigation phase.

Indeed, any investigation instrument used in the method in question must offer consistency requirements with the phenomenon to be observed in terms of precision, bottom scale and sampling frequencies.

In practice, the detecting means has to offer measuring precision that in particular enables not to approximate significant figures through the effect of only reading sensitivity. Further, in the case of movement detectors (for example position transducers, comparators, etc.), it is preferable for the bottom scale to be expressed in terms of positive and negative extent and with a total elongation that is sufficiently great as to contain the expected movement even in the presence of the anchor ring of the foundation becoming possibly loose.

Further, the acquisition frequency at which to acquire the movement of the foundation will have to be sufficiently high as to be able to describe the expected movement function, without creating redundancies.

In practice, in order to have a clear definition of the parameters used to select correctly the suitable instruments dedicated to measuring the movements and video shots of the phenomenon, it is necessary to perform numeric finite elements simulations and/or obtain useful information in the scientific literature on the movements in question, in particular on wind generators where the locking level of the anchor ring and/or in the foundation has been comprised.

With regard to numeric simulations, finite elements modelling can relate to two structural conditions, i.e. a first structural condition in which the anchor ring is perfectly anchored in the foundation, and a second structural condition in which the anchor ring is not perfectly solidified. Analogous simulation conditions can be provided if adhesion in a foundation with anchor bolts instead of the anchor ring has to be tested.

The finite elements model can be made discrete following an analysis of the design of the wind generator, identifying geometric and material features and modelling the terrain, for example with a Winkler elastic sole.

At the base of the tower and in the zones near the foundation, the constraint exerted on the body is theoretically that of a fixed joint.

Accordingly, it is expected that the movements on the vertical axis, which are the sum of the effect of its weight and of the effect induced by the rotation, are extremely limited.

Lastly, the predictive analyses conducted on a structure free of faults and different representative load conditions have movement values in the different analyzed points, starting from an undeformed condition, which are less than a millimetre.

On the other hand, the predictive analyses conducted on damaged models will return movement values that increase as the deadhesion surfaces increase.

In this case, the reference values will start from movements of the order of a few millimetres both upwards and downwards until they reach movements above a few centimetres.

Further, in operation, (i.e. in the experimental investigation phase or test), wind generator behaviour is envisaged as being non-linear, owing to the presence of contact problems that entail friction in function of the present loads, so it is not plausible to think of detecting alternating upward and downward vertical movements. Accordingly, acquisition can be preferably performed at two levels, i.e. on the maximum single upward or downward movements and on the movements obtained as the sum thereof as an absolute value.

At this point, knowing the information calculated by the analyses of the undamaged and damaged wind generators models and/or knowing the extent values of the movements detected in the literature in similar cases in the presence of reduced adhesion and/or knowing the expected shape of the movement-time function, the detecting means (contact transducers and/or camera for the video shots) with the appropriate features will be selected.

Owing to the method proposed here, it is possible to configure an experimental investigation campaign, having the objective of observing load conditions to be monitored over time, by adopting measuring instruments having precision, a bottom scale and sampling frequencies that are suitable for acquiring significant measurements of the movements shown by the foundation structure.

Measuring the movements obtained by the experimental investigation phase enables the condition of adhesion, whether perfect, or loose, of the metal elements to be determined and a lifetime extension for the foundations of the tested wind generator to be determined by calculations of known type.

## Claims

1. Method for determining detecting means for checking adhesion between metal elements and concrete of a foundation of a wind generator, said method comprising the following phases:
- detecting a wind direction in the place where said wind generator is situated;
- storing a prevailing wind direction in said place;
- determining at least four monitoring points of said foundation on the basis of said detected wind direction and said prevailing wind direction;
- installing detecting means configured to detect vertical movements at said at least four monitoring points;
**characterized in that** before said installing:
- determining at least one feature of an expected movement in a vertical direction of at least one point of said foundation;
- selecting said detecting means on the basis of said at least one feature of an expected movement so that said detecting means is suitable for detecting said expected movement.

2. Method according to claim 1, wherein said at least four monitoring points are so determined as to be arranged symmetrically two by two with respect to a centre of said wind generator.

3. Method according to claim 1 or 2, wherein said phase of determining at least one feature of an expected movement is performed by at least one numeric simulation, in particular by a finite element analysis of a model of said wind generator or of a wind generator consistent with said wind generator.

4. Method according to claim 3, wherein said numeric simulation considers a model of an undamaged wind generator and a model of a wind generator with simulated damage, in particular with simulated loosening of the metal elements.

5. Method according to any one of the preceding claims, wherein said phase of determining at least one feature is performed by ascertaining historical records of vertical movements relating to a further wind generator that is consistent with said wind generator.

6. Method according to any one of the preceding claims, wherein said phase of installing detecting means comprises arranging at least one movement detector in contact with each monitoring point.

7. Method according to claim 6, wherein said phase of selecting comprises selecting said movement detector so as to have suitable precision and/or a suitable bottom scale for detecting said expected movement.

8. Method according to any one of the preceding claims, wherein said phase of installing detecting means comprises arranging vision means configured to detect said vertical movements.

9. Method according to claim 8, wherein said phase of selecting comprises selecting said vision means so as to have sampling frequency that is suitable for detecting said expected movement.

10. Method according to any one of the preceding claims, comprising acquiring said vertical movements by said detecting means.

11. Method according to claim 10, wherein said acquiring is performed if a wind speed measured in real time is greater than a set value; said set value being in particular equal to 7 m/sec.

12. Method according to claim 10 or 11, wherein said acquiring is performed in a phase of arresting said wind generator.

13. Method according to any one of claims 10 to 12, wherein said acquiring is performed in a phase of starting up said wind generator.

14. Method according to any one of claims 10 to 13, wherein said acquisition lasts for an interval of time of at least 5 minutes.
